(19) Europäisches Patentamt
European Patent Office
Office européen des brevets

(11) EP 4 687 096 A1

(12) **EUROPEAN PATENT APPLICATION**

(43) Date of publication:
04.02.2026 Bulletin 2026/06

(21) Application number: 25192805.7

(22) Date of filing: 30.07.2025

(51) International Patent Classification (IPC):
**G06T 5/00** (2024.01)  **G06T 7/00** (2017.01)
**H04N 7/18** (2006.01)

(52) Cooperative Patent Classification (CPC):
**G06T 7/0002; G06T 5/00; H04N 7/18;**
G06T 2207/10016; G06T 2207/20084;
G06T 2207/30168

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 31.07.2024 US 202418790700

(71) Applicant: **Avago Technologies International
Sales
Pte. Limited
Singapore 768923 (SG)**

(72) Inventors:
• **Liang, Victor Kai-Chieh**
Irvine, 92618 (US)
• **Chen, Xuemin**
Irvine, 92618 (US)

(74) Representative: **Dilg, Haeusler, Schindelmann
Patentanwaltsgesellschaft mbH
Leonrodstraße 58
80636 München (DE)**

(54) **SYSTEMS FOR AND METHODS OF VIDEO QUALITY MONITORING USING DEEP LEARNING
MODEL EVALUATIONS OF RELATED VIDEO REGIONS**

(57)     A system (200) for monitoring video quality and performing actions in response to validated quality issues. Detected video quality loss is validated by deep learning models operating on various regions of a video scene. Patterns of related regions are provided to the deep learning models and their quality scores and artifact types evaluated. Combining the quality scores of inter-related regions allows for increased confidence that the quality loss is significant, and actions should be taken based on the cross-validated results.

FIG. 2A

**Description**

BACKGROUND

The present disclosure relates to monitoring the quality of a video stream including but not limited to monitoring for and/or validating video quality loss using multiple artificial intelligence (AI) deep learning (DL) models monitoring different regions within a video scene.

In certain applications perceived quality of a video stream can deteriorate due to an impairment of the communication channel carrying the video stream or increased network traffic. Quality loss may be detected using DL models configured to evaluate a region and/or an object in a video scene allowing actions to be taken that reduce or otherwise mitigate the perception of the quality loss. The DL models may be trained with different data sets to output a quality score and the type of quality deterioration or artifact present in the region. The DL models may have different architectures. Evaluating multiple regions of the video stream provides complementary results that allow for cross-validation of quality scores leading to greater confidence in the overall detection of quality loss.

BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.

FIG. 1 is a block diagram of a communications network including video streaming devices, according to some embodiments.

FIG. 2A is a block diagram of a system for monitoring the quality of a video scene, according to some embodiments.

FIG. 2B is a block diagram of a system for streaming video including a video processing device with a system for monitoring the quality of a video scene, according to some embodiments.

FIG. 3A is an illustration of video scene indicating various regions and the relationship between the regions, according to some embodiments.

FIG. 3B shows a pyramid structure indicating a resolution or scale relationship between regions of a video scene.

FIG. 4 is a block diagram of the flow of information through a video quality monitoring system, according to some embodiments.

FIG. 5 is a plot illustrating a linear relationship between the output of a deep learning model and the quality loss significance, according to some embodiments.

FIG. 6 is a plot illustrating a non-linear relationship between the output of n deep learning model and the quality loss significance, according to some embodiments.

FIG. 7 is a flow diagram for calculating a validation score for a pattern in a video scene, according to some embodiments.

FIG. 8 is a flow diagram for combining several validations scores into a confidence score, according to some embodiments.

FIG. 9 is a flow diagram for calculating a set of intermediate thresholds used to calculate the validation score, according to some embodiments.

DETAILED DESCRIPTION

Some embodiments relate to a monitoring system and method that use a number of deep learning (DL) models to evaluate a number of regions within a video scene. A region refers to an area of interest of a frame, e.g. an object or a square area, to operate on by DL models. Region and object are used interchangeably in this document. Objects may be segmented by machine learning models or signal processing techniques of any kind to determine the regions or areas of interest. The regions are evaluated using the deep learning models and the outputs are combined based on scale, spatial, and/or temporal relationships between the regions evaluated. The deep learning models may be trained with different data sets to output a quality score and the type of quality deterioration or artifact present in the region and may have different architectures. In some embodiments, evaluating multiple regions of the video scene provides complementary results that allow for cross-validation of quality scores leading to greater confidence in the overall detection of quality loss. Actions may be taken to mitigate the perception of detected quality loss.

An embodiment of the present disclosure relates to a system for monitoring a quality of a video scene. The system includes one or more circuits configured to perform operations. The operations include providing a pattern including an identification of a number of regions in the video scene to be evaluated by deep learning models. The deep learning models are trained to determine an artifact type present in a region of the video scene and determine a quality score for the region of the video scene. The operations also include evaluating a region of the pattern using a respective deep learning model of the deep learning models to obtain a result including a quality score for and artifact types present in the region of the pattern. The operations also include calculating a validation score for the pattern using the result from each region of the pattern. The operations also include performing an automated action to affect the quality of the video scene using the validation score.

A deep learning (DL) model refers to a circuit or software structure that processes a number of inputs to create a number of outputs in some embodiments. A DL model may perform a number of intermediate step or include a number of layers in its processing. For example, a DL model may refer to an implementation of a multi-dimensional linear function; a nonlinear regression model; a deep-learning model such as a convolutional neural network or autoencoder; a transformer model; or a recurrent neural network. Training a DL model refers to adjusting the parameters of the DL model based on data examples so that the model can perform a particular task in some embodiments. A trained DL model refers to a model that has been adjusted or otherwise modified in light of data examples in some embodiments. For example, a DL model may be trained to perform classification or regression using supervised learning where the training data includes respective outputs of the DL model for each input.

An artifact type in a video scene refers to a type of distortion or other quality loss in some embodiments. For example, an artifact type may refer to pixelization, blur, or discoloration of the video scene. A region refers to an area of interest of a frame in a video scene to be evaluated by models in some embodiments. For example, a region may be an object, a bounding box of an object in a video scene, or a patch in the scale, space, or time domain. A scene refers to a sequence of continuous action in a film, video, or play in some embodiments. For example, a scene may refer to a unit of video narrative that occurs at a specific location and time. A scene usually involves one or more characters (e.g. video objects) engaged in some form of interaction or activity. A video stream refers to a transmission of video information over a communications channel in some embodiments. For example, a video stream may refer to a digital transmission of a movie, television show, or conference call. A video stream may contain a number of video scenes. A quality score refers to a grade that measures the visual quality of the video displayed at the destination in some embodiments. For example, a quality score may refer to a score based on perception similar to the mean opinion score based on human judgments or a quality score may refer to an engineering or mathematical definition of video quality.

A pattern refers to a number of related regions of a video scene in some embodiments. For example, a pattern may refer to a set of overlapping regions of different sizes; a set of spatially related regions; or a set of temporally and spatially related regions. An identification of a region refers to instructions for choosing a particular region within a video scene in some embodiments. For example, an identification of a region may refer to the location of the lower, right portion of the region within a frame along with the height and width of the region. Identifications of a region may repeat for each frame of a video scene or for every number of frames or a sequence of frames (e.g., every 5th frame). A respective DL model refers to the DL model (both architecture and parameters) that will be used to evaluate a specific region in some embodiments. For example, each region of a pattern may be evaluated by the same respective DL model or each region may use a different DL model or any combination thereof. Evaluating a DL model refers to performing inference or calculating the output of a model for a given input in some embodiments. For example, evaluating a DL model may refer to determining the quality score for a given region of a video scene by presenting it to the input of the DL model. A validation score refers to a score related to the uncertainty that there is an artifact in a region or group of regions of a video scene in some embodiments. For example, a validation score may refer to a score obtained by combining the quality score obtained from several related regions of a video scene and a high validation score may be indicative of a high level of certainty that there is an artifact present in the regions. An action to affect the quality of a video scene refers to a change that can be made to the processing or transmission of a video scene that may have an effect on the video quality in some embodiments. For example, an action to affect the quality of a video scene may refer to changing the bit rate of the encoded video scene, changing the maximum resolution of the video scene, performing a video enhancement technique on the scene, or requesting the video scene from a different server.

In some embodiments, the operations include providing a configuration including a number of patterns and calculating a confidence score using the validation score for each pattern of the configuration.

In some embodiments, the automated action includes performing using a deep learning model to upscale the video scene, and the automated action is performed in response to the confidence score being greater than a threshold.

In some embodiments, the regions of the pattern includes regions related by at least one of a scale relationship, wherein a first region of the pattern encompasses a second region and a third region of the pattern; a geometric relationship, wherein the pattern includes a first region adjacent to a second region; or a temporal relationship, wherein the pattern includes a first region of a frame of the video scene and a second region of a subsequent frame related spatially by a speed at which objects are moving in the video scene.

In some embodiments, the regions of the pattern are related by a scale pyramid relationship, wherein a first region encompasses a first group of equally sized regions and each region of the first group of equally sized regions encompass a second group of equally sized regions. The first region and each of the first group of equally sized regions are downsampled to have the same number of pixels.

In some embodiments, evaluating the region of the pattern includes generating a number of intermediate quality thresholds based on a minimum quality threshold and a local quality threshold of the region of the pattern, the local quality threshold includes a weighted moving average of quality scores from evaluating the respective deep learning model of the region of the pattern including the quality score for the region of the pattern to the intermediate quality thresholds to determine a loss significance value.

A confidence score refers to a score related to the confidence that there is an artifact and quality loss in a video scene based on the evaluations of several patterns in some embodiments. For example, a confidence score may refer to the score obtained by adding or performing another function using the validation scores of all the patterns. Upscaling the video scene refers to a video enhancement technique wherein the resolution is increased without introducing a tiling effect in some embodiments. For example, a deep learning model can be trained to upscale video. Equally sized regions refer to equally or similarly sized regions that do not have exact size equality in some embodiments. For example, equally sized regions may refer to similarly sized regions for which minimal preprocessing can be done so that the same DL model can be used to evaluate them. Intermediate thresholds refer to values of the mean opinion score (MOS) referenced to different significance levels of the quality loss in some embodiments. For example, all values of MOS below one threshold may indicate a quality loss significance of a one whereas all values of MOS below another lower threshold may indicate a quality loss significance of two. A minimum quality threshold refers to the lowest quality threshold related to the highest loss significance value across all frames in some embodiments. For example, no loss thresholds may be developed below a MOS of four or any other configured number. A local quality threshold of the region refers to a quality threshold that depends on the region of the video frame in some embodiments. For example, some regions may have a lower average quality (e.g., the corners of the frame) than other regions. This variation may be reflected by the local quality thresholds. A weighted moving average refers to a method for calculating an average over a previous period of time where the samples used in the average are weighted based on from how far in the past the same is in some embodiments. For example, weighted moving average may equally weight the last ten samples or it may have an exponential weight in which each sample further in the past gets a weight that is equal to the product of the next more recent weight multiplied by a number between zero and one. A loss significance value refers to a number or score representing the quality loss in a video scene in some embodiments. For example, a loss significance value may be computed by linear or non-linear quantization the MOS value using the above-mentioned set of thresholds. A region encompassing another region refers to the receptive field or area of the region on the frame encompassing the area or receptive field of another region in some embodiments. A region adjacent to another region refers to regions that are proximate each other in the frame in some embodiments. For example, boundaries of the two regions could coincide or there may be a spatial relation between the first region and the nearby region. Pattern relationships can be between any number of regions across spatial, temporal, and scale domains.

In some embodiments, the operations include calculating a loss relevance value using the artifact type present in the region of the pattern and using a mathematical function of the loss significance value and the loss relevance value to determine a validation score element for the region of the pattern.

A loss relevance score refers to a numerical score representing the relevance of a particular artifact type to the perceived video quality of a scene in some embodiments. For example, viewers of a video conference may not be as sensitive to a blurring artifact and blur could be assigned a lower loss relevance score. A mathematical function refers to any mapping that assigns, for any member of its input domain, a number of its output range in some embodiments. For example, a mathematical function may refer to a mapping from a tuple of two numbers to a single number (e.g., $x + 2y$). A validation score element refers to an input to the validation score calculation from a single region of a pattern in some embodiments. For example, a validation score element may refer to the product of the loss relevance and the loss significance.

In some embodiments, the respective deep learning model is pretrained, stored in the one or more circuits, and selected to evaluate the region based on a criterion of the region.

A DL model that is pretrained refers to a model that has been trained for a specific function before being deployed to the final hardware on which it will run in some embodiments. For example, a neural network may be trained to classify the types of animals in a picture before being embedded in security system hardware. In some embodiments, pretrained DL models can be fine-tuned after being deployed by training them with additional data specific to the final application or environment. A criterion of the region refers to any information related to that region of the video scene, or the video stream as a whole in some embodiments. For example, a criterion of the region may refer to the size of the region, the content of the region, the location of the region in the frames, the codec, source resolution, bitrate, or other system metadata.

In some embodiments, the pattern is configured based on content of the video scene.

In some embodiments, providing the pattern is performed using an additional deep learning model trained to detect and/or segment regions of interest within the video scene.

A region of interest refers to a region of the video scene that is of particular interest in some embodiments. For example, the region could have significant complexity due to the number of objects within the region (e.g., a crowd of people in an area of the video scene) or the region may contain the focal point of the video scene. Segmenting regions of interest refers to separating regions interest from other areas of the video scene in some embodiments. For example, segmenting a region may refer to identifying a foreground object from the background or identifying an in-focus object from one that is out of focus. In some embodiments, segmenting a region refers additionally to determining the outer boundary of an object in the video scene.

In some embodiments, performing the automated action includes at least one of: causing the video scene to be provided at a lower resolution; causing the video scene to be provided at a lower bitrate; prompting a customer to upgrade to a different level of service; prioritizing the video scene over other forms of communication traffic; request the video scene from a different server; storing a portion of the video scene for further analysis; performing and video enhancement technique, increasing an amount of buffered video; alerting a customer that they are experiencing intermittent streaming issues; alerting a provider of the video issues; or providing quality analytics related to the video scene to the provider of the video scene.

Providing a video scene at lower resolution or lower bitrate refers to setting an upper limit on the resolution or bitrate of the scene in some embodiments. For example, if a network has intermittent congestion, it may be beneficial to restrict the resolution so that the viewer of the video scene on the network does not see the resolution shift between quality levels often. In some embodiments, restricting the bitrate may be more effective than restricting the resolution because the required bitrate may change during different scenes as the complexity of the video increases (e.g., more edges of objects, faster movement in the video, etc.). Different levels of service refer to the bandwidth in an internet or other communication network sales contract in some embodiments. For example, a level of service may be 10 Megabits per second (Mbps), or 50 Mbps. The level of service of either the viewer or the streamer may affect the quality of the video scene. Prioritizing the video scene refers to sending video traffic over a communications network before or in greater density than other forms of data in some embodiments. For example, a video scene may be prioritized over a background download of a software update. Requesting a video scene from a different server refers to changing the source of the video scene in some embodiments. For example, a server in one region may be currently overburdened or the network hardware that the data goes through before arriving at the destination may be overburdened and obtaining the video from a different server with a copy of the content could be beneficial even if the new server is geographically further away. The request for a server change or the indication of quality loss could be sent to a content delivery network of the current video scene. Storing a portion of the video scene for further analysis may refer to storing the portion locally or sending it to a centralized location in some embodiments. For example, a portion of a video scene that the DL models were unable to validate may be stored for future training. Performing a video enhancement technique may refer to applying additional deep learning algorithms to upscale the video scene. Buffered video refers to the amount of video that has been received at the destination, but not yet displayed in some embodiments. For example, if there are intermittent quality issues buffering video may allow the video to play at high quality by playing video from the buffer when network traffic is momentarily delayed and filling the buffer when the network speed increases. Alerting the customer refers to displaying a message in some embodiments. For example, alerting a customer may be performed with one of the other actions in order to inform the viewer of the current situation. The provider of a video scene refers to the company, platform, or internet service provider that is providing the video stream in some embodiments. Quality analytics related to the video scene refers to any data and metadata describing the video quality in some embodiments. For example, quality analytics could include the model predicted mean opinion score of the video scene.

An embodiment of the present disclosure relates to a method for monitoring a quality of a video scene. The method includes providing a pattern comprising an identification of a plurality of regions in the video scene to be evaluated by deep learning models. The deep learning models trained to determine an artifact type present in a region of the video scene and determine a quality score for the region of the video scene. The method also includes evaluating a region of the pattern using a respective deep learning model of the deep learning models to obtain a result including a quality score for and artifact types present in the region of the pattern. The method also includes calculating a validation score for the pattern using the result from each region of the pattern. The method also includes performing an automated action to affect the quality of the video scene using the validation score.

In some embodiments, the method includes providing a configuration including a number of patterns and calculating a confidence score by combining the validation scores for each pattern of the configuration.

In some embodiments, the regions of the pattern include regions related by at least one of: a scale relationship, wherein a first region of the pattern includes a second region and a third region of the pattern; a geometric relationship, wherein the pattern includes, within its area, a first region adjacent to a second region; or a temporal relationship, wherein the pattern includes a first region of a first unit and a second region of a subsequent unit related spatially by a speed at which objects are moving in the video scene.

In some embodiments, evaluating the region of the first pattern includes generating a number of intermediate quality thresholds based on a minimum quality threshold and a local quality threshold of the region of the first pattern. The local quality threshold includes a weighted moving average of quality scores from evaluating the respective neural network. The method also includes comparing the quality score for the region of the first pattern to intermediate quality thresholds to determine a loss significance value.

An embodiment of the present disclosure relates to a system for validating neural network determined assessments of a quality of a video scene. The system includes one or more circuits configured to perform operations. The operations also include providing a first number of regions within a first sequence of the video scene. The operations also include providing a set of deep learning models including deep learning models configured to evaluate a region for an artifact type present in the region and a quality score of the region. The operations also include evaluating each region of the first number of regions using a respective deep learning model of the set of deep learning models to generate a first set of results. The operations also include combining the first set of results using a mathematical function to obtain a validation score for the number of regions. The operations also include performing an automated action to affect the quality of the video scene using the validation score.

In some embodiments, the operations also include providing a second number of regions within the first sequence of the video scene. The operations also include evaluating each region of the second number of regions using a respective deep learning model of the set of deep learning models to generate a second set of results. The operations also include combining the second set of results to obtain a second validation score for the second number of regions and the operations include calculating a confidence score based on the validation score and the second validation score.

In some embodiments, evaluating each region of number of regions includes generating a number of intermediate quality thresholds for a region of the number of regions based on a minimum quality threshold and a local quality threshold of the region. The local quality threshold includes a weighted moving average of quality scores from evaluating the respective deep learning network. The quality score for the region is compared to the number of intermediate quality thresholds to determine a loss significance value.

In some embodiments, the operations include calculating a loss relevance value using the artifact type present in the region, using a mathematical function of the loss significance value and the loss relevance value to determine a validation score element for the number of regions, and adding the validation score element for each region of the number of regions.

In some embodiments, the number of regions include regions related by at least one of: a scale relationship, wherein a first region of the number of regions includes a second region and a third region of the number of regions; a geometric relationship, wherein the number of regions includes a first region adjacent to a second region; or a temporal relationship, wherein the number of regions includes a first region of a first unit and a second region of a subsequent unit related spatially by a speed at which objects are moving in the video scene.

This summary is illustrative only and is not intended to be in any way limiting. Other aspects, inventive features, and advantages of the devices or processes described herein will become apparent in the detailed description set forth herein, taken in conjunction with the accompanying figures, wherein like reference numerals refer to like elements.

**Communications Network**

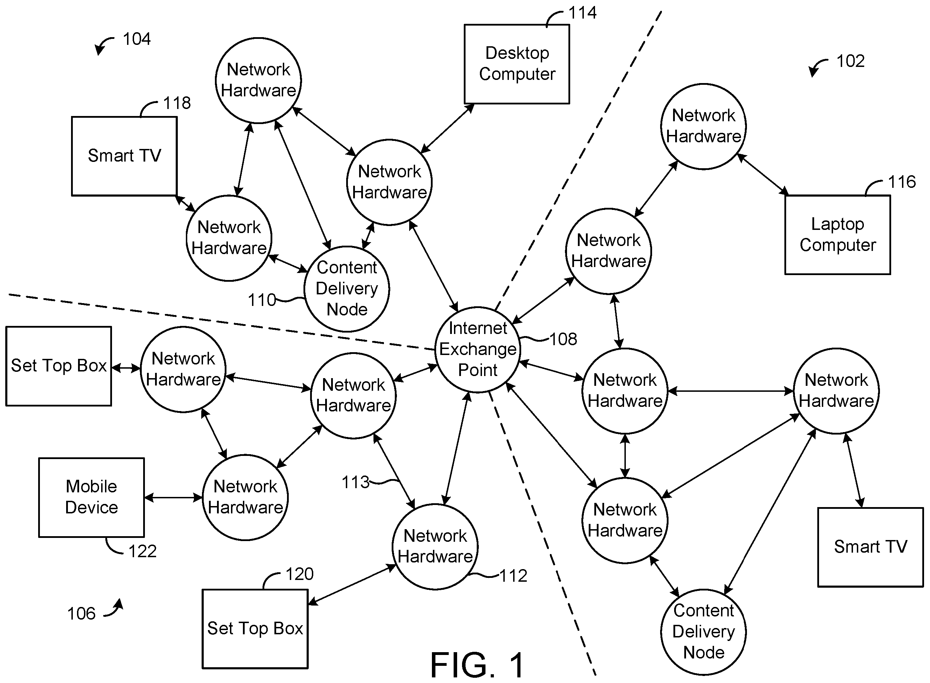

FIG. 1 is a diagram illustrating a communications network that may carry video streaming information according to some embodiments. The communications network is shown to have internet service providers (ISP) (e.g., ISP 102, 104, and 106) serving different regions of the network. Data can be transferred between different ISPs at internet exchange points. For example, data originating in ISP 102 can be sent to a destination in ISP 104 by traversing internet exchange point 108. Within a given ISP there is various network hardware (e.g., network hardware 112) configured to transmit information over any of the communication channels (e.g., channel 113). Network hardware may include routers, network switches, gateways, repeaters, transmitters, receivers or any other type of hardware configured to move data within a communications network. The network hardware may be configured to communicate over different or multiple types of communication channels. Communications channels as illustrated in FIG. 1, for example, may be fiber optic cable, coaxial cable, twisted pair, or wireless. Wireless communication may be performed using electromagnetic waves of any frequency. For example, using radio waves, microwaves, or portions of the optical spectrum (infrared, visible, or ultraviolet). Communications may be performed terrestrially (e.g., in wires in the ground, under water, or suspended in the air or wirelessly through the atmosphere, through space (e.g., satellite communications), or under water.

In some embodiments, the communications network is used to deliver streaming video. Video streams may include one-way or multiple-way live video streams. For example, video streams may include video conferences, a video call, or e-commerce video streams. Video streams may also be of stored video content. For example, user created content can be hosted on various websites and streamed over the internet. Video streams may also include major motion pictures accessible over media platforms. Live video streams may originate at and be destined for connected consumer electronics (e.g., desktop computer 114, laptop computer 116, smart TV 118, set top box 120, mobile device 122). Stored video content may originate at a content delivery node (e.g., content delivery node 110). Video streams may include a number of scenes that are transmitted to the viewer.

In some embodiments, content delivery nodes may be configured to store commonly accessed video content at several locations across the larger network. This may allow popular content to be served quickly to multiple customers on demand. For example, a server for a video streaming service may be located in ISP 102. If a customer streaming from smart TV 118 would like to view the content and there was no content delivery network, video data from the server to the customer would have to traverse the network through multiple network hardware devices of ISP 102, through the internet exchange point 108, through more network hardware of ISP 104 and through the customer's own local network before arriving at smart TV 118. Through the use of a content delivery network, that video content can be stored on a server of content delivery node 110 and streamed efficiently to the customer's smart TV. This may reduce latency in the data containing the video, improving service for the customer. Nodes of the content delivery network can manage their content by maintaining storage of video near locations that it is being viewed.

Video streams may be live, originating at and destined for consumer electronics. For example, a user of mobile device 122 may initiate a video call that is received by a person using laptop computer 116 and another person using desktop computer 114. Because the stream is being sent over networks crossing multiple ISPs, it may be necessary to limit the resolution or bit rate of the video call to keep latency to a low enough level to have a fluid conversation. The resolution or bitrate limit may change as network traffic increases or decreases.

In some embodiments, live video streams may be destined for many customers. For example, a live sporting event may be viewed by millions of people at the same time. Data from the cameras streaming the event may be sent to various locations across the networks to be broadcast over several different media. In some embodiments, the event may be broadcast over internet streaming services, satellite television services, cable television services, and/or radio television broadcasts.

In some embodiments, a set top box (e.g., set top box 120) may be used to convert the digital transmission of the video to signals the television or other display device is capable of processing. For example, the transmission could be converted from a digital signal communicated over coaxial cable to signals on a High-Definition Multimedia Interface (HDMI) cable. In some embodiments, the set top box may be responsible for the smooth playing of video. For example, the set top box may be configured to communicate network capability back to the source so the video stream is played in a specific resolution or at a specific bitrate. The set top box may include a decoder to process an encoded video stream into signals for the television. The set top box may convert the video stream from digital to analog for transmission to the television over analog connections (e.g., RCA or video graphics array (VGA)).

In some embodiments, video quality loss will occur if the communications network is congested or if any of the communication channels are impaired. Increased network traffic may cause data packets to be lost or arrive late manifesting in an artifact where a block of the picture is missing or remains static. An impairment of the communications channel may cause data to be misinterpreted leading to artifacts on the screen. In some embodiments, the video may be complex or having many moving objects causing certain transmissions at lower bitrates to appear pixilated or have compression artifacts.

It may be beneficial to notify the viewer, content provider, and/or the internet service provider of any quality issues that are occurring. In some embodiments, the content provider may be able to determine a new path through the network that has lower latency or otherwise would provide a better viewing experience. The content provider or ISP may desire to upsell the customer to a higher fidelity streaming service and could send an email, alert, or other message to the customer if quality issues are persistent. In some embodiments, the customer or the customer's local network infrastructure may be able to prioritize the other video content over other data transfer (e.g., a software update download). In some embodiments of a communications network that is transmitting video, it may be necessary or desired to validate the any detections or classifications of quality loss so that action is not taken unnecessarily. For example, multiple tests can be performed providing synergistic results.

## Quality Loss Detection and Validation Circuitry

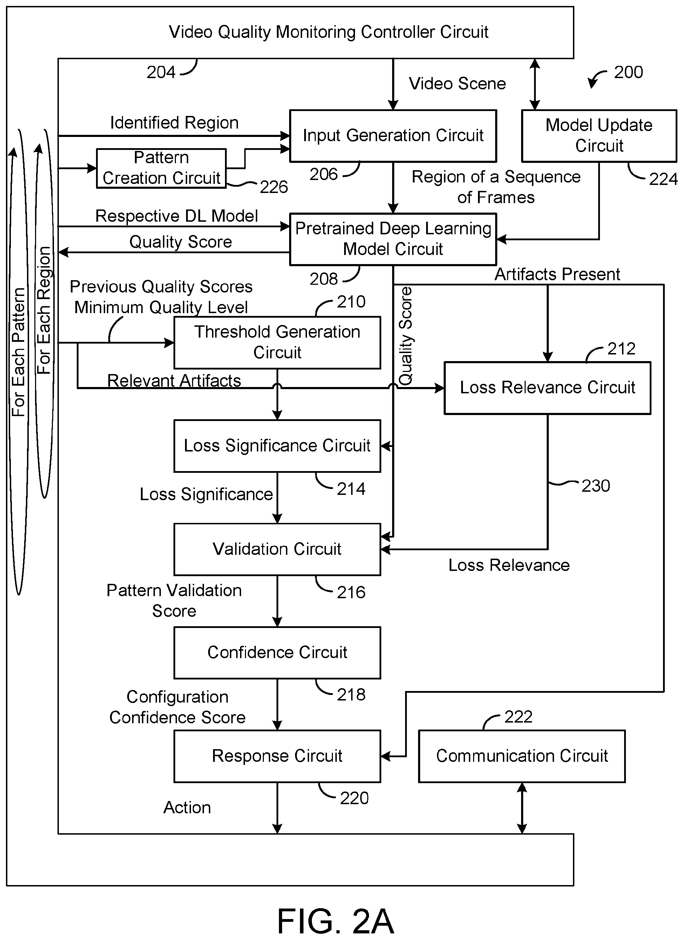

FIG. 2A is an illustrative block diagram of circuitry and its interconnection for a system configured to perform quality loss detection and/or validation according to some embodiments. The system may be configured to validate any detection of quality loss to reduce false alarms and the number of unnecessary actions taken based on those false alarms.

Video quality monitoring system 200 is shown to include several interconnect circuits according to some embodiments. Video quality monitoring system 200 may include video quality monitoring controller circuit 204; input generation circuit 206; pretrained deep learning model circuit 208; threshold generation circuit 210; loss relevance circuit 212; loss significance circuit 214; validation circuit 216; confidence circuit 218; response circuit 220; communications circuit 222; and model update circuit 224.

A circuit may include, for instance, an integrated circuit, an application specific integrated circuit (ASIC), a field programmable gate array (FPGA), a processor, a memory device, or a number or combination of the same. A circuit may also include a combination of hardware, software, and/or firmware. A single circuit may be capable of performing more than one of the features described herein or a single feature may be implemented by a combination of circuits. For example, an ASIC may embody the functionality of input generation circuit 206 and pretrained deep learning model circuit 208, and a node on a cluster of computers in the cloud may embody the functionality of model update circuit 224. The various circuits or parts of video quality monitoring system 200 may include software modules and/or routines for performing the operations described herein.

In some embodiments, video quality monitoring system 200 uses any communication capability (e.g., communication capability 230) to control the flow of data through the various circuits, to cause execution of the circuit operation(s), etc. Communication capability (e.g., communication capability 230) may represent any form of communication. For example, if the two circuits are integrated into a single integrated circuit (IC), the communication may be provided by a conductive material (e.g., doped silicon, metal, etc.); if the two circuits are on the same circuit board, communication may be over copper traces on a communication bus. In some embodiments, the operation(s) embodied by some of the circuits is performed on a node of a cluster of computers (e.g., the "cloud") and the communication may be over a network. Any portion of the network may be wireless.

A circuit described as configured to perform a function (or described as performing the function) may include embodiments for which the circuit is configured to cause the performance of the function (or is causing the performance of the function). A circuit described as configured to cause the performance of a function (or described as causing the performance of a function) may include embodiments for which the circuit is configured to perform the function (or is performing the function).

With reference to FIG. 2A video quality monitoring system 200 includes video quality monitoring controller circuit 204 in some embodiments. Video quality monitoring controller circuit 204 may be configured to control the timing and flow of data through the other circuitry of video quality monitoring system 200. For example, video quality monitoring controller circuit 204 may cause the circuits to execute in a specific order to perform the function of video quality monitoring system 200. In some embodiments, video quality monitoring controller circuit 204 may route the signals carrying information and/or outputs of other circuits to the circuits that are dependent on that information.

In some embodiments, video quality monitoring controller circuit 204 may provide an identification of a region to input generation circuit 206; and provide the output (e.g., a region of a video scene) to pretrained deep learning model circuit 208. Video quality monitoring controller circuit 204 may then provide the output mean opinion score (MOS) and/or the types of artifacts present to threshold generation circuit 210, loss relevance circuit 212, and loss significance circuit 214. The outputs of these circuits may be provided to validation circuit 216, and confidence circuit 218 for further processing of patterns and or a number of patterns by video quality monitoring controller circuit 204. Video quality monitoring controller circuit 204 may also be responsible for causing communication circuit 222 to communicate any actions to their final destination either within the same device as video quality monitoring system 200 or to another device over a network.

In some embodiments, input generation circuit 206 is configured to receive an input video scene and an identification of a region. Input generation circuit 206 may be configured to generate an input for the DL models. The identification may provide that the region is to be sampled every frame of the video scene or every 2 frames or some other combination of sampling the frames or units of the video scene. In some embodiments, the input to a DL model of pretrained DL model circuit 208 is an array of pixels values. The pixel values may be 3 arrays of numbers (one for every color channel: reg, green, and blue) or the pixel values may be a single 2-dimensional array (in grey-scale). In some embodiments, the DL models may not directly work on images from a frame within the video scene and input generation circuit 206 may first perform processing to convert the region into other features that the DL models are configured to accept.

In some embodiments, input generation circuit may contain deep learning models to determine a region of interest. For example, edge detection may be used to determine the subject of the video scene. Identifying the subject may allow for important and spatially related regions to be identified and added to the set of regions to be evaluated.

In some embodiments, pretrained deep learning model circuit 208 may include several DL models. The models may be provided to pretrained deep learning model circuit 208 either by video quality monitoring controller circuit 204, by an external system through communications circuit 222, or by the circuitry itself either through the configuration of the traces of the circuit, the doped silicon of an integrated circuit (IC), and/or by instructions stored within the circuit. In some embodiments, pretrained deep learning model circuit 208 includes both the model architecture and the parameters (e.g., weights) used with the DL model. In some embodiments, the model architecture is included in pretrained deep learning model circuit 208 and the weights are provided as part of the input.

In some embodiments, pretrained deep learning model circuit 208 is configured to accept a region of a unit of video from input generation circuit 206 and a selection of the DL model that should be used to evaluate the region. For example, the same deep learning model may be used to evaluate more than one region of the video scene. Pretrained deep learning model circuit 208 may be configured to evaluate the provided region to determine a quality score (e.g., MOS) and detect any artifact types present in the region. In some embodiments, pretrained deep learning model circuit 208 is configured to provide the quality score to video quality monitoring controller circuit 204 for additional processing before providing the scores to threshold generation circuit 210. For example, video quality monitoring controller circuit 204 may be configured to calculate a weighted moving average of previous values of the quality score. In some embodiments, pretrained deep learning model circuit 208 may provide the quality score directly to threshold generation circuit 210 for processing.

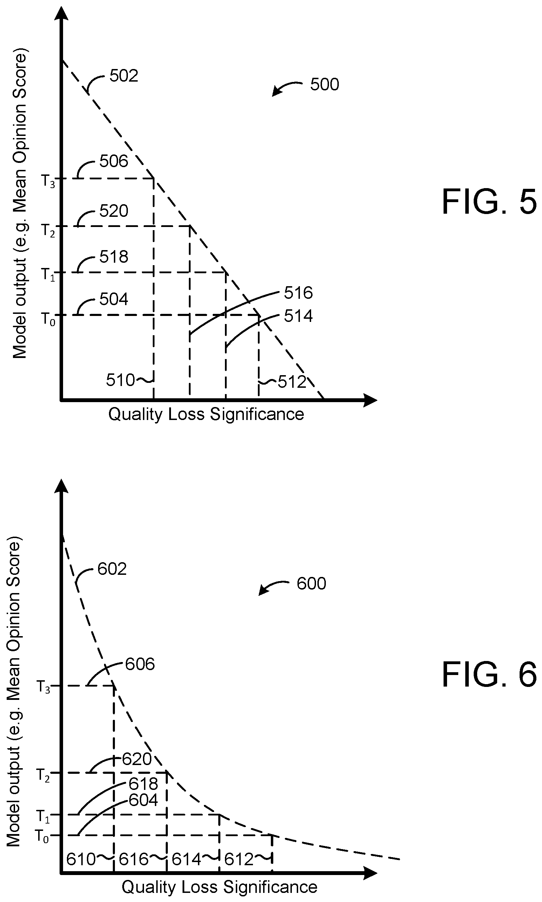

In some embodiments, threshold generation circuit 210 is configured to generate a number of intermediate threshold levels to compare to the quality scores. Threshold generation circuit 210 may generate a number of thresholds based on a global or minimum quality score and a local quality score. Providing a local quality score allows loss significance to be weighted based on typical and/or desired quality of the region of the video scene. Local quality scores may be provided either for a particular region or based on the previous quality of that region (e.g., using a weighted moving average) For example, the corner of a video scene may often be of lower perceived quality because it is out of focus or there are lens aberrations in the original images. Threshold generation circuit 210 allows the further nonlinear transformation and/or quantization of the quality score to improve quality loss detection and/or validation. Thresholds may be generated using various techniques. Examples of these techniques are explained in more detail in the description with reference to FIGS. 5 and 6.

In some embodiments, loss significance circuit 214 is configured to compare the quality score from pretrained deep learning model circuit 208 to the thresholds created by threshold generation circuit 210. Loss significance circuit 214 may provide a loss significance score related to the significance of quality loss indicated by a lower quality score. For example, loss significance circuit 214 may compare the quality score to decreasing thresholds provided by threshold generation circuit and provide a loss significance score equal to the number of thresholds that the quality score is less than. The thresholds may decrease from the local quality level to the global quality level. For example, the thresholds may be MOS values of 6, 5, 4, 3 and a quality score of 3.74 would be indicative of a loss significance of 3 because 3.74 is lower than 3 of the threshold values. In some embodiments, other functions of the quality score may be used to calculate the loss significance and the functions may not be quantized or otherwise depend on a comparison to a threshold.

In some embodiments, loss relevance circuit 212 is configured to provide a loss relevance score dependent on the types of artifacts present in the in the region of the video scene. Certain artifacts may not be as important or detrimental to the video quality in all applications. The loss relevance score provides a mechanism for which the artifact types can be weighted differently. For example, discoloration may be given twice the weight of compression artifacts.

In some embodiments, validation circuit 216 is configured to determine, for a pattern including several related regions, a validation score. Validation circuit 216 may, for example, multiply the loss significance score by the loss relevance score for each region of a pattern. The sum of all the products may be passed through a function to generate the validation score. It is noted that the validation score may depend on several loss significance scores and several loss relevance scores.

The features of the circuitry on which the inputs to validation circuit 216 depend may have to be executed multiple times prior to validation circuit 216 having the inputs required for it to run. The repetition of each region of a pattern may be managed temporally, wherein each circuit processes a region, and the processing is repeatedly executed for each region in a sequence; the repetition may be managed spatially, where there are several copies of the circuit available to process a region and the calculations for each region may be processed in parallel and concurrently; or a combination of these two techniques be used (e.g., some parallel processing may be performed but there may not be enough copies of the circuit to have all calculations performed concurrently).

In some embodiments, the calculation of the validation score may depend on the type of relationship shared by the regions of the pattern. For example, the validation score of patterns related by overlapping regions of different scales may be a value if the quality score drops below a certain threshold at only one of the scales; a larger value if the quality score drops below a certain threshold in two of the scales (e.g., a small scale region and an intermediate scale region that includes the small scale region or an intermediate scale region and a wide scale region that includes the intermediate scale region); and a third larger value if the quality score drops below a certain threshold in a region of all three scales (e.g., a small scale region, an intermediate scale region, and a wide scale region). Thus, validation scores may be higher if the quality score is below a particular threshold (a quality loss is detected) across multiple scales. Advantageously performing a cross-validation to increase the certainty of any detected quality loss.

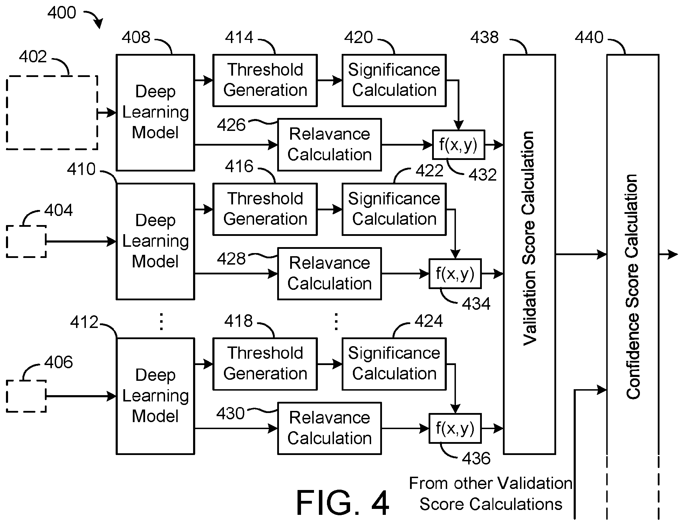

In some embodiments, the validation scores of spatially related patterns are determined by summing the loss relevance of all regions of the pattern and summing the loss relevance multiplied by the loss significance in all regions of the pattern. The two sums may then be compared to various increasing thresholds. For example, the sum of the loss relevance may be compared to the number of regions in the pattern in order to indicate that the loss is relevant for at least a percentage of the regions of the pattern (e.g., 50 %). A validation score can be given based on the percentage of regions with a relevant loss and the sum of the product of the loss relevance and the loss significance. In some embodiments, the validation scores of temporally related patterns may depend on if the pattern represents a slow mode, a medium mode, or a fast mode and how many of these modes validated the quality loss. Detailed equations describing some embodiments of a validation score calculation are described herein with reference to FIG. 4.

In some embodiments, confidence circuit 218 is configured to determine, for a configuration of a number of patterns, a confidence score. A confidence score may be calculated for each region defined for the video scene. Confidence circuit 218 may, for example, add the validations scores for each pattern a region is a member of and assign that confidence score to the region. Similar to validation circuit 216, confidence circuit 218 may depend on inputs from several circuits including a multiplicity of inputs from validation circuit or copies of several validation circuits. These inputs may be calculated in series, in parallel, or any combination thereof.

Evaluating multiple regions related through different compositional, spatial, and/or temporal patterns allows video quality monitoring system 200 to detect quality loss with more certainty compared to using a single DL model. Furthermore, multiple DL model may decern features of a video scene that would be insignificant to a single DL model evaluating the entire video scene or an entire frame. Multiple small deep learning models require less training data and can provide improved results without the complexity of a single large DL model that is capable of accurately evaluating an entire video. Beyond training, monolithic DL models capable of inspecting an entire frame with certainty may require significantly more evaluations and parameters to fit their function. The number of parameters required to evaluate an entire 4k (e.g., 3840x2160 pixels) may be several orders of magnitude greater than the number of parameters required to evaluate a small region. Storing and/or communicating this large number of parameters may require complex circuitry. Using multiple smaller DL models allows the parameters to be reused for multiple regions reducing the storage requirements in a resource limited environment. Further, the number of parameters required to evaluate the entire high-resolution video may be even greater than the sum of all parameters used across all evaluations of DL models used to cross-validate quality loss in several small regions. Total number of parameters used in all evaluations by the DL models may be a relevant proxy for total number computations performed and thus the expense of the hardware required to run the detection and/or the power usage required to perform the computations. Thus, the configuration present may provide a significant improvement to the functioning of devices used to monitor video quality and to the field of video quality monitoring in general.

In some embodiments, response circuit 220 is configured to recommend actions based on the confidence scores. Response circuit 220 may be configured to recommend actions based on the magnitude of a confidence score. For example, response circuit 220 may produce more aggressive recommendations as the confidence in a quality loss detection increases. For example, first increasing the buffer for the video scene and second requesting the scene at a lower bitrate when the confidence grows above a threshold. In some embodiments, the action output by response circuit 220 depends on the artifacts present or based on how the confidence of quality loss has changed over time. For example, if the levels of confidence are oscillating or changing frequently, response circuit 220 may recommend lowering the resolution of the scene so that at least the viewer is not distracted by constant changes in the performance. In some embodiments, response circuit 220 may be configured to store a portion of the video scene to be processed later. The stored video data may be used to retrain the DL models and/or be send to a centralized location for human inspection.

In some embodiments, video quality monitoring system 200 includes model update circuit 224. Model update circuit 224 may be configured to train or otherwise adjust the parameters of any of the DL models in pretrained deep learning model circuit 208. Adjustments or training of the DL models may be based on new examples of video containing quality issues. The viewer of the video scene, for example, may have a button to report an issue on a menu or remote control for the device containing video quality monitoring system 200. In some embodiments, as issues are reported those video scenes and or regions containing the artifacts may be used to created additional training data sets. In some embodiments, new training data is communicated from video quality monitoring system 200 to a centralized location for processing or data flagged as uncertain may be sent back to a centralized location for additional validation.

In some embodiments, video quality monitoring system 200 includes pattern creation circuit 226. Pattern creation circuit 226 may be configured to define or create a definition of patterns in response to the detection of a quality loss in any region. For example, video quality monitoring system 200 may generally sample regions of a video scene for evaluation using a DL model and in response to a detection of quality loss, pattern creation circuit 226 may create patterns with regions related spatially, temporally, or through multiple scales to be evaluated. In this manner, the region that initially was flagged as potentially erroneous can be cross-validated and any a necessary action take without the risk of false alarms and taking unnecessary actions.

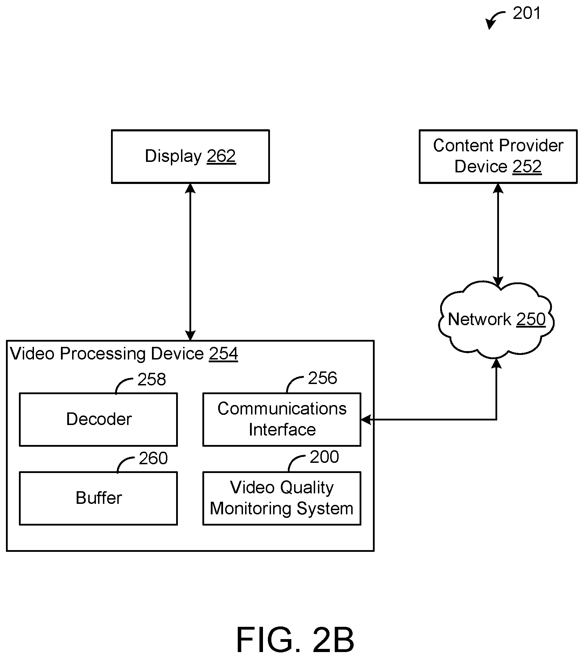

FIG. 2B shows a larger system 201 in which video quality monitoring system 200 may be used according to some embodiments. In some embodiments, video quality monitoring system 200 is embedded in a video processing device 254 such as a set top box or a component of a mobile steaming device. In some embodiments, the functionality of video quality monitoring system 200 may be distributed over more than one communicably connected device. In some embodiments, system 201 may include video processing device 254; display 262; content provider device 252; and network 250.

In some embodiments, video processing device 254 is communicably connected to display 262 as a means to display any video scene that is being accessed. Display 262 may be communicate with the video processing device wirelessly, display 262 may be physically coupled to the video processing device with wires, or display 262 may be attached to the video processing device (e.g., within the same housing or using some of the same circuitry). Video processing device may obtain data from a video stream over network 250 from a content provider device 252. Content provider device 252, may be a server storing a video stream, it may be a mobile device used to perform a live stream on an e-commerce site, or any other device capable of communicating video data over network 250.

Video processing device 254 may include additional circuits, hardware, firmware, and/or software components to perform the functionality required to process streaming video data into signals display 262 is configured to accept. In some embodiments, video processing device 254 includes communications interface or circuit B 256; decoder 258 and buffer 260. Communications interface or circuit B 256 may be configured to communicate information to and from network 250. For example, communications interface or circuit B 256 may be used to receive streaming video data from content provider device 252 via network 250 and send information regarding the video quality back to content provider device 252 or any other device connected to network 250. In some embodiments, communications interface or circuit B 256 may be used to communicate portions of problematic videos back to a centralized location to be used for training future DL models. For example, the DL models may be configured to additionally output an uncertainty in their quality score evaluation. When the uncertainty in the quality score is high, the video data (e.g., the region) may be communicated to a centralized processing center for further evaluation. In this way a comprehensive training set may be created using the data that is most difficult for the current DL models to evaluate.

Communications interface or circuit B 256 may be of the same type of communications interface as communications interface or circuit 222 in video quality monitoring system 200 or it may be of a different type. For example, if video quality monitoring system 200 is part of video processing device 254, communications interface or circuit B 256 may be configured to communicate using internet protocol whereas communications circuit 222 may be a hardware bus (e.g., I2C). In some embodiments, communications circuit 222 may be unnecessary in view of communications interface B 256.

In some embodiments, decoder 258 is used to decompress streaming video data received by video processing device 254. Buffer 260 may store an amount of video data (either compressed or decompressed) to be used if there are any intermittent network problems that cause data to arrive late. Buffer 260 may adjust the amount of storage based on the frequency of the network issues and the type of video. During a video conference, for example, a smally amount of video may be buffered to ensure that the displayed video is not delayed from when it was sent. Delays in video conferencing video could cause people to talk over each other and generally provide a poor experience. When streaming a stored video, or a single directional live stream, video can be buffered longer as there is less sensitivity to delay from the person viewing the scene. In some embodiments, video quality monitoring system 200 may detect a quality loss and cause buffer 260 to store more video data in order to be provided at the intermittent times network latency is high.

## Quality Loss Validation Strategies

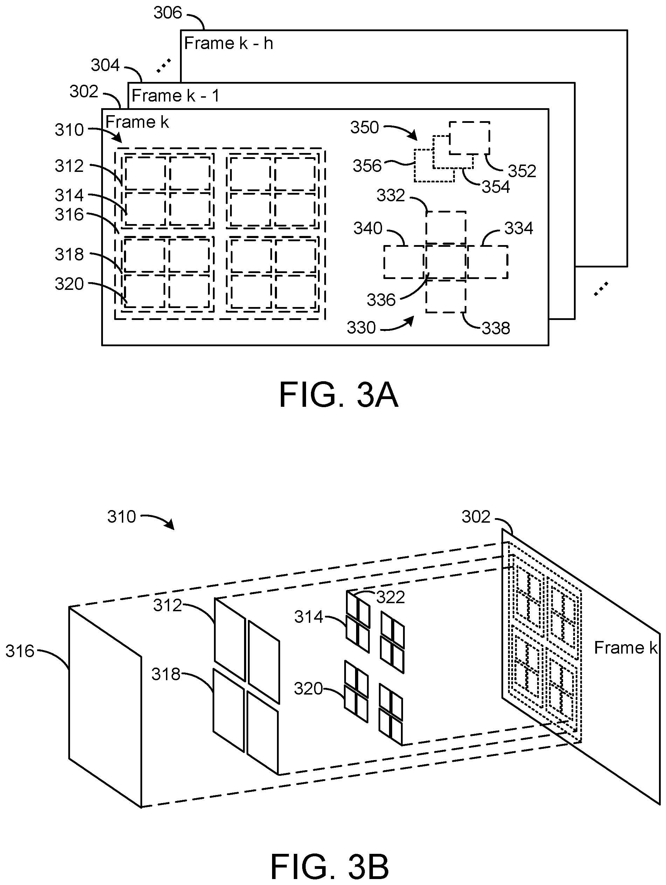

Generally, FIGS. 3 - 6 describe the strategy for validating quality loss detection using multiple deep learning models. Evaluating multiple regions of the video scene provides complementary results that allow for cross-validation of quality scores leading to greater confidence in the overall detection of quality loss. Thus, proper action may be performed after detection is cross validated.

With reference to FIG. 3A, inputs to the various deep learning (DL) models in the present disclosure are regions of a video scene according to some embodiments. FIG. 3A shows a unit of a video scene, specifically $h + 1$ sequential frames (e.g., frame 302, 304, and 306). Frame $k$ (302) represents a current frame and frames $k - 1$ (304) to $k - h$ (306) represent previous frames. Various patterns of regions of the video scene are shown according to some embodiments. A pattern may refer to a number of related regions. The regions of a pattern may relate through various scales. It may be advantageous to cross-validate quality loss detections across several scales (e.g., a wide view and/or several small regions). Pattern 310 is an example pattern related across multiple scales. Pattern 310 includes wide region 316, which includes a number of intermediate regions (e.g., 312 and 318), which each include a number of smaller regions (e.g., 314 and 320). It is noted that if several regions of pattern 310 and across multiple scales evaluate as showing significant quality loss there is a greater probability that the quality loss is significant, and an action should be taken. Pattern 310 shows a relationship where each dimension of a wider region is divided into 2 regions in the next scale; thus, the wide region includes 4 intermediate regions which each include 4 small regions. In some embodiments, the number of divisions in each dimension may be a number other than two (e.g., three or five). In some embodiments, the regions at a particular scale may overlap or be otherwise take an orientation other than a grid.

With reference to FIG. 3B, a pattern with regions related across multiple scales may be referred to as a "pyramid" due to the structure of regions overlapping other regions with decreasing resolutions through repeated subsampling. A pyramid is a multiple resolution structure. It is not limited to three resolutions levels. For example, four resolution levels may be used for higher levels of validation. Pattern 310 is shown to have a pyramid relationship across multiple scales, including wide receptive region 316, intermediate receptive regions (e.g., regions 312 and 318), and smaller receptive regions (e.g., 314, 320, and 322). In some embodiments, the larger and intermediate regions of a pyramid are downsampled to the same size as the smaller regions. Therefore, the same deep learning models can be used across all levels of the pyramid structure. For example, regions 314, 320, and 322 of pattern 310 may be of size 240 by 240, the 4 intermediate regions (e.g., regions 312, and 318) and the upper region 316 may be downsampled to the same size of 240 by 240 representation. As described below, any suitable downsampling methods may be used in the pyramid structure. Using the same deep learning model across multiple regions reduces the parameters that must be stored for the models and may save storage space in a resource limited edge device. Reducing the number of models that must be trained may also have the effect of reducing the amount of training data that needs to be collected, further reducing the cost of deployment. It is noted that while FIGS. 3A and 3B show some space between the regions of the pyramid or scale relationship, this should not be considered a limiting example. In some embodiments, the regions of a scale may be multiple overlapping or non-overlapping areas adjacent to each other. For example, the area of a wide receptive region may be equally divided into a set of four areas at the lower scale. A region may also be an object, or a bounding box surrounding an object in some embodiments.

Advantageously, various downsampling techniques may be used so the same deep learning models can be used across multiple scales in order to reduce the number of DL models stored in the circuits of the video quality monitoring system, to reduce the number of parameters required by the video quality monitoring system, and to reduce the amount of training that must be performed. Reducing the training may have a significant effect on the amount of training data that needs to be collected, which may be an expensive and time-consuming undertaking. For example, wide region 316 may have 16 times or more as many pixels as one of the small regions. For each region to be evaluated by the same DL model, region 316 may be downsampled using, for example, an averaging or smoothing procedure.

In some embodiments, patterns include regions related geometrically. Pattern 330 is an example of five regions (332 - 340) related geometrically in the form of a cross. Patterns may be related spatially in any manner (e.g., square, line, diagonal line, diamond, or any other shape). Spatially related patterns may be particularly effective when they are generated to match the content characteristics (e.g., object sizes and shapes). Spatially related patterns may be generated by a DL model. For example, a model can be trained to perform edge detection and determine the object that is the focus of the scene. Patterns may be developed by tiling or otherwise orienting regions to cover the focal object detected by the DL model. In some embodiments, the subject of the video scene is detected, and a pyramid structure is moved to cover the area of the scene containing the subject. In some embodiments, the subject of the video scene is detected, and a pyramid structure is added to cover the area of the scene containing the subject in addition to other pyramid structures monitoring the video scene. Spatially related regions in a pattern may advantageously be used to detect if an erroneous artifact has propagated into other regions of the video. Video compression techniques may be block-based, and use copy-and-paste in their design such as intra-frame prediction, inter- frame prediction (motion estimation), etc. One erroneous block may be repeatedly copied and pasted in the current and other frames creating error propagation. Similarly, when transmission errors such as packet loss occur, the loss tends be compounded by the decoding algorithms such as inverse entropy coding, motion compensation, etc. causing errors that may not be isolated within one region. Thus, cross-validation of spatially related regions may be used to efficiently detect issues and validate the significance of detected issues.

In some embodiments, patterns include regions that are related temporally. Pattern 350 is an example of a pattern including 3 temporally related patterns (patterns 352, 354, and 356). In some embodiments, a temporally related pattern may be the same region of a frame repeated over temporally sequential frames; or a temporally related pattern may include regions on temporally sequential frames that are translated along the frame based on the speed an object is likely to travel on screen. Temporally related patterns are of particular use in cross-validating and/or detecting quality loss in or around objects that are moving. The artifacts associated with those objects are likely to move with the object in the video scene.

In general, temporal prediction may use the videos past history to predict the propagation of artifacts or quality loss over time. In a video with slow moving objects, artifacts or quality loss may stay generally in the same area for a longer time period. In some embodiments, the regions of temporally related patterns overlap from one frame to the next frame of the video. In action videos with fast moving objects, it may be necessary or desired to define patterns that included regions that have moved a significant distance from frame to frame. Additionally, because the motion of objects in the video is uncertain, temporally related regions may be defined with larger regions as they are evaluated. For example, an artifact may be identified, and cross-validation patterns may be defined with regions that are larger in frames from longer ago or with regions that are larger in future frames. It is noted that the distance which an object travels across the frames may also depend on the sampling period between frames (e.g., every number of frames) in addition to object moving speed. Thus, the temporally defined patterns may also depend on this frame sampling parameter. Additionally, DL models may also be used to detect moving objects and/or the motion directions of objects across frames and thus can be used to determine or help define temporally related patterns.

In some embodiments, pyramid relationships across multiple frames are used to validate the detection of artifacts or quality loss that may be moving across the scene in subsequent frames. For example, an artifact detected in small region may (e.g., region 322), in the next frame, move out of that region, but be found in the intermediate sized region (e.g., region 312) that includes the small region that originally detected the artifact or quality loss. Even later in the scene, the quality loss may move out of the intermediate sized region, but still be found in the large region (e.g., region 316).

In some embodiments, patterns used in cross-validation are statically defined and repeated for all or a sampling of frames dependent on the processing power available and the computational complexity of the models. For example, pattern validations may be repeated every tenth frame. Pattern validations may also be repeated consecutively for the entire sequence of frames if processing power permits. In some embodiments, there is a static set of regions that are evaluated and when a region is indicated as having a quality loss, additional related patterns are employed in order to perform cross validation. For example, once one region is flagged for quality loss, additional patterns could be applied around the detected region to determine if any additional nearby patterns also show the quality loss. In some embodiments, some or all of the detected regions may be merged into a larger region called "macroblock" to indicate a broader regional, widespread quality loss. Or, as another example, a scale pyramid relationship could be generated including the region that detected the quality loss and all patterns available from the pyramid could be evaluated. If a region is determined, by a DL model, to have quality loss and the video scene also indicates that there is fast motion in one direction, a pattern may be generated to cross-validate regions in past frames where the object was estimated to come from and/or regions in future frames from where the object is estimated to come from. Generally, evaluating a sampling of regions for quality loss before performing cross-validation across multiple patterns allows significant computational savings as the related regions of a pattern may not be identified or evaluated until any of the sampled regions are determined to have a quality loss. In some embodiments, cross validations are performed, and confidence scores are calculated for all regions even if no quality loss was detected within that region. For example, the confidence score for a region may be the sum of all the validation scores for the patterns the region belongs to.

With reference to FIG. 4, information flow diagram 400 shows how information flows within a video quality monitoring system according to some embodiments. In some embodiments, the architecture of diagram 400 is statically set, configured by a user for a particular application, configured based on the type of video scene being monitored, or created on the fly based on the regions detected as containing artifacts or a quality loss by a first layer of detectors or quality monitors.

In some embodiments, each region of a pattern takes a forward path through a set of calculations. For example, region 402 is evaluated by DL model 408. The evaluation of region 402 by DL model 408 may generate both a quality score (e.g., MOS) and an artifact type description (e.g., discolored blocks) to use in further calculations. The quality score may be supplied to threshold generation in block 414 where thresholds are calculated based on previous quality scores (e.g., via a weighted moving average) and a global quality threshold. The thresholds and the current quality score may be forwarded to a significance calculation in block 420 in order to calculate a quality loss significance value. The artifact type detected by DL model 408 may be used by a relevance calculation in block 426 in order to generate a quality loss relevance. Quality loss significance and quality loss relevance are provided to block 432 where a function is performed on the two values. For example, the loss significance and loss relevance may be multiplied to form a validation score element for region 402. In some embodiments, the results of multiple calculations may be included in the validation score element for a region.

In some embodiments, a parallel architecture is used so that multiple regions can be evaluated at the same time. In some embodiments, a parallel architecture is not used, and the calculations of different regions must be performed sequentially by the same hardware. In either case, diagram 400 is representative of the flow of information according to some embodiments. The evaluation of region 404 is performed by DL model 410 and the subsequent blocks 416, 422, 428 and 434. This is repeated for all regions of a pattern including region 406 which is the final region of the exemplary pattern of diagram 400.

In some embodiments, the validation score element for each region of a pattern (e.g., region 402, 404, and 406) is provided to block 438 to perform a validation score calculation. In some embodiments, the validation score is a summation of the validation score elements. In some embodiments, other functions of the validation score elements are used to calculate the validation score for a pattern. In some embodiments, the validation score calculation may be different and depend on the pattern being evaluated (e.g., the calculation may depend on the relationship, the number of regions in the pattern, or a factor that may indicate the relative importance of that particular pattern to the cross-validation)

In some embodiments, the validation score calculation depends on the relationship between the regions of the pattern. For example, a pattern which includes regions related across multiple scales (e.g., the compositional or pyramid relationship of pattern 310) may be calculated based on a sequence of comparisons to various thresholds. The validation score of pattern 310 may, for example, be calculated using the following procedure. For each of the small regions (e.g., region 314 and 320) compare the quality score to a threshold. The global threshold may be used as it represents the most significant quality loss in the small frames; however, any threshold may be used. The comparison may be performed by the equation:

$$P_0 = \begin{cases} 0 & I_k < T_0 \; for \; any \; k \\ 1 & otherwise \end{cases},$$

where $I_k$ is the quality score for the $k^{th}$ small-scale region and $T_0$ is the threshold used at the small scale level. This comparison may be repeated for each of the scales using the regions of that scale and a chosen threshold of that scale to obtain $P_1$ and $P_2$ for the intermediate scale and the wide scale, respectively. The validation score $s$ for the pattern may be calculated by:

$$s = \begin{cases} s_0, & P_0 = 0, P_1 = 0, or \; P_2 = 0 \\ s_1, & P_0 = P_1 = 0 \; or \; P_1 = P_2 = 0, \\ s_2, & P_0 = P_1 = P_2 = 0 \end{cases}$$

In some embodiments, other variations of the above calculations may be used to calculate the validation score of a pattern related by multiple scales.

In some embodiments, the validation score for a pattern with spatially related regions (e.g., pattern 330) is calculated using the procedure described in the following operations. For the discussion of this calculation $w_k$ is used to represent the loss significance (e.g., the number of thresholds that the quality score is less than) and $u_k$ is used to represent the loss relevance of the $k^{th}$ region of the pattern (e.g., $u_k = 1$ if the artifact type is relevant for the video scene). The validation score of a spatially related pattern, for example, may be calculated by determining the sum of the loss relevance and the weighted some of the loss significance and comparing those numbers to a threshold. The sums may be given by:

$$x_1 = \sum_k u_k,$$

and

$$x_2 = \sum_k u_k w_k.$$

The validation score of the pattern may then be calculated by comparing these values to thresholds as shown in:

$$s = \begin{cases} s_1, & x_1 > t_1 \; and \; x_2 > c_1 \\ s_2, & x_1 > t_2 \; and \; x_2 > c_2, \\ 0, & otherwise \end{cases}$$

where t and c represent threshold values. In some embodiments, the threshold calculations may depend on the total number of regions and/or other parameters. In some embodiments, $t_2 > t_1$, $c_2 > c_1$, and $s_2 > s_1$ reflecting that the second validation is stronger.

It is noted that a single pyramid relationship may provide a large number of spatially related patterns. For example, ten 2x2 square patterns (e.g., nine small scale and one intermediate scale), four 3x3 square patterns, one 4x4 square pattern, four horizontal 4x1 patterns, four vertical 4x1 patterns, and two diagonal 4x1 patterns. If further validations scores are desired other shapes (e.g., a cross, etc.) may be used.

In some embodiments, regions may be combined to form a "macroblock" to indicate a larger area of quality loss. For example, regions in a spatially related pattern that was validated as having a quality loss (e.g., $s > 0$) may be merged into a macroblock. Each region of the macroblock may have different levels of quality loss. The regions of a macroblock do not need to have the same artifact type either. The purpose of the macroblock is to indicate an area in which quality loss is more widespread. In some embodiments, overlapping patterns that have been validated may be formed into the same macroblock.

In some embodiments, the validation score for a pattern with temporally related regions (e.g., pattern 350) uses a combination of techniques that are similar to the compositionally related patterns (e.g., pyramids) and patterns related spatially. Consider pattern pyramids similar to pattern 310 but repeated across multiple frames in the same area of the video scene similar to pattern 350. Three example patterns will be described for this calculation: slow mode, medium mode, and fast mode, but any number of modes are possible. The validation score of a slow mode pattern may be calculated by, for example, the following operations. For the discussion of this calculation $w_k$ is used to represent the loss significance (e.g., the number of thresholds that the quality score is less than) and $u_k$ is used to represent the loss relevance of the $k^{th}$ region of the pattern (e.g., $u_k = 1$ if the artifact type is relevant for the video scene). In slow mode, the regions of the pattern may be the same region (e.g., of the same scale and position) of the video scene but across different frames of the video. For example, a slow mode pattern may include the upper left of the small-scale region of pyramid pattern 310 across several frames and/or a slow mode pattern may include the lower left of the intermediate scale region of pyramid pattern 310. Thus, a single pyramid relationship of the form of pattern 310 may provide 21 different slow mode, temporally related patterns that can be analyzed (e.g., 16 small scale regions, 4 intermediate scale regions, and 1 wide scale region). The frames do not need to be consecutive frames and any number of frames can be used. For example, a frame could be taken each second of time or every other frame may be used. It is noted that the amount of time (or frames) between the frames used in the calculation of a validation score for a temporally related frames has an effect on the effective speed at which an object moves across the video scene and thus may affect the definitions of slow, medium, and/or fast mode. The validation score of a slow mode temporally related pattern, for example, may be calculated by determining the sum of the loss relevance, the sum of the loss significance, and the weighted sum of the loss significance and comparing those numbers to a threshold. The sums may be given by

$$x_1 = \sum_k u_k,$$

$$x_2 = \sum_k u_k w_k,$$

$$x_3 = \sum_k w_k.$$

The validation score of the pattern may then be calculated by comparing these values to thresholds based on the number of regions in the pattern and/or other parameters:

$$s = \begin{cases} s_1, & x_1 > t_1 \ and \ x_2 > c_1 \ and \ x_3 > h_1 \\ s_2, & x_1 > t_2 \ and \ x_2 > c_2 \ and \ x_3 > h_2 \\ 0, & otherwise \end{cases}$$

where $t$ represents a threshold of relevant artifacts, $c$ represents a threshold of weighted loss significance, $h$ represents a threshold of loss significance. In some embodiments, $t_2 > t_1$, $c_2 > c_1$, $h_2 > h_1$ and $s_2 > s_1$ reflecting that the second validation is stronger.

The validation score of a medium mode pattern may be calculated, for example, using the same or similar operations as in as slow mode. In medium mode, the regions of the pattern may include a number of regions in the smallest scale and a number of regions in the intermediate scale of a pyramid relationship across multiple frames of the video scene. This may reflect the ability for an object moving at a medium speed to travel a greater distance across the frames of a video scene. For example, three small scale regions and two intermediate scale regions may be used; thus in this example, a single pyramid relationship of the form of pattern 310 may provide as many as 20 different medium mode, temporally related patterns that can be analyzed (e.g., each column and each row of the small scale patterns can provide two sets of three regions, the main diagonal can provide two sets of three regions, and two sets for the main antidiagonal). Note that superdiagonals were not considered in this example, because a superdiagonal would span 3 intermediate scale regions; however, the framework is flexible, and any definition of medium mode patterns could be developed. The frames do not need to be consecutive frames and any number of frames can be used.

The validation score of a fast mode pattern may be calculated, for example, using the same or similar procedure described for medium mode. However, in fast mode a different number of small-scale regions, intermediate scale regions, and wide scale regions of a pyramid relationship may be used. Use of the wide scale region may reflect the ability for an object moving at a fast speed to travel a greater distance across the frames of a video scene. For example, two small scale regions, two intermediate scale regions, and one wide scale regions may be used in a fast mode pattern.

The pyramid relationship used in the present disclosure may provide computational advantages. For example, only 21 regions make up the structure of the example pyramid relationship of pattern 310, yet a large number of patterns can be generated to validate any potential quality loss or artifact detection. This maximizes the benefit of the evaluations performed by the deep learning models and allows for multiple validations, across many patterns, while performing only a few evaluations of the deep learning model (e.g., the 21 evaluations of each region). Advantageously, building confidence in quality loss detections even in a resource limited environment (e.g., a circuit in a set-top video processing box).

The validation scores of multiple patterns are provided to block 440 representing the confidence score calculation. In some embodiments, the confidence score is a summation of the validation scores of each pattern a region belongs to. In some embodiments, other functions may be used to calculate the confidence score. In some embodiments, confidence scores from regions may be further combined to indicate confidence scores for patterns, macroblocks, or the video scenes.

In some embodiments, a high confidence score is indicative of the quality loss being detected across multiple scales, multiple spatial relationships, and/or multiple temporal relationships. In may be desirable to take a mitigating action (e.g., connecting to a different content delivery node) in response to a high confidence score or multiple high confidence scores that occur proximate each other in time. In some embodiments, quality loss can be corrected or mitigated in some way by performing an enhancement technique and/or upscaling the video. If a video cannot be received consistently at a high resolution without the introduction of artifacts or quality loss, it may be possible to provide a better viewer experience by requesting the video at a lower resolution and/or bit rate and enhancing the video locally with the enhancement techniques embedded in the video receiver's circuitry. For example, filters and/or machine learning models can provide upscaled video and reduce the perceived tiling affect or compression noise typical of a lower quality stream. In some embodiments, video enhancement and/or upscaling is performed when the confidence score is greater than a threshold.

In some embodiments, relevant artifact types are adaptive and can be changed during video streaming. For example, the relevant artifact types may be chosen based on content in the region, the location of the region in the frames, the codec, source resolution, bitrate, or other system metadata from the stream provider or the hardware receiving the stream. The artifact may also adapt based on certain thresholds, for example, in response to a significant number of regions validated with artifacts and quality loss, related artifact types and/or more artifacts may be considered relevant. Specifically, more artifact types may be included when significant video loss is validated, which may occur when severe transmission or encoding/decoding errors exist.

With reference to FIGS. 5 and 6 the process for calculating a set of intermediate thresholds is illustrated, according to some embodiments. FIG. 5 shows plot 500 which is illustrative of linear threshold spacing whereas FIG. 6 shows plot 600 illustrative of nonlinear threshold spacing.

With reference to FIG. 5, maximum significant quality score 506 and minimum quality score 504 are (e.g., MOS values) may be mapped via a function 502 to form minimum loss significance value 510 and maximum loss significance value 512, respectively, along the x-axis of plot 500. A number of intermediate loss significance values (e.g., 514 and 516) may be equally spaced between the maximum and minimum values. The intermediate values may be mapped through function 502 back onto the quality score axis (e.g., y-axis of plot 500) to form intermediate quality score thresholds (e.g., values 518 and 520). These thresholds may then be used to calculate the quality loss significance that is output from the loss significance circuit (e.g., 214). For example, the loss significance calculation may count the number of thresholds that current quality score is less than to determine the loss significance. In this way, loss significance may be "quantized" and more amenable to performing cross-validation. In some embodiments, no thresholds are calculated, and the loss significance may just be a function of the quality score without any quantization.

With reference to FIG. 6, operations for determining intermediate thresholds using a nonlinear function are described according to some embodiments. Maximum significant quality score 606 and minimum quality score 604 are (e.g., MOS values) may be mapped via a nonlinear function 602 to form minimum loss significance value 610 and maximum loss significance value 612, respectively, along the x-axis of plot 600. A number of intermediate loss significance values (e.g., 614 and 616) may be equally spaced between the maximum and minimum values. The intermediate values may be mapped through function 602 back onto the quality score axis (e.g., y-axis of plot 600) to form intermediate quality score thresholds (e.g., values 618 and 620). Because function 602 is nonlinear the quality score thresholds are no longer equally spaced. Using nonlinear mapping functions may create thresholds that more closely relate to how video quality loss significance is perceived (e.g., less concern about differences if the quality score is high but more sensitive to changes in low values). These thresholds may then be used to calculate the quality loss significance that is output from the loss significance circuit (e.g., 214). For example, the loss significance calculation may count the number of thresholds that current quality score is less than to determine the loss significance. In this way, loss significance may be "quantized" and more amenable to performing cross-validation.

**Operational Flow**

Features and functionality of the video quality monitoring system may be used to define methods for monitoring and/or cross-validating detection of video scene quality. These methods may synergistically evaluate several regions to determine the confidence level of a quality loss detection within a region. Various mitigating actions, as defined previously, may be taken in response to a quality loss detection which has been validated.

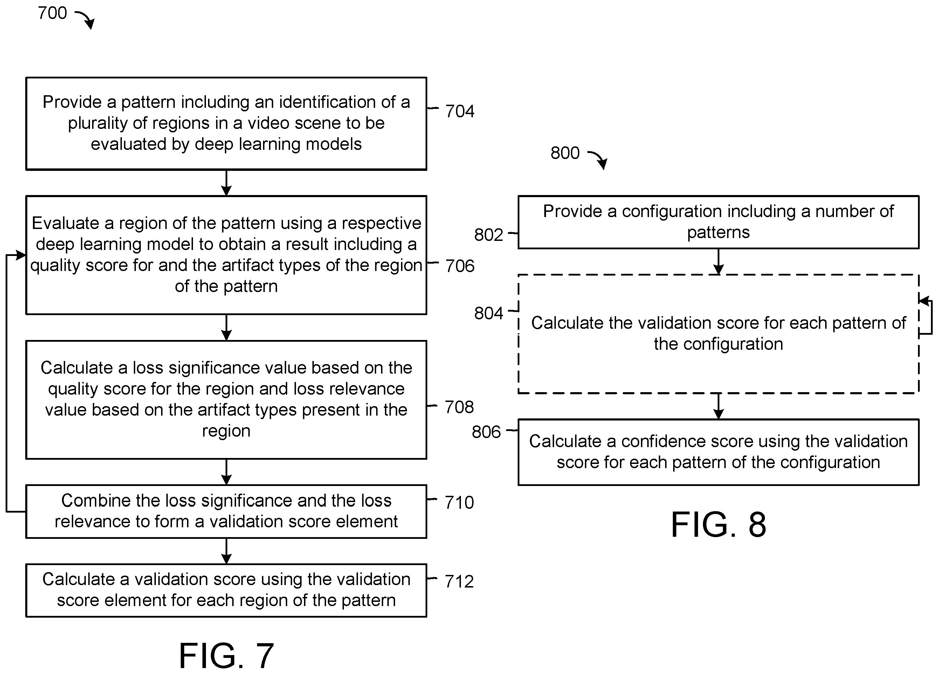

With reference to FIG. 7, flow 700 of operations shows operations for monitoring the quality of a video scene according to some embodiments. In some embodiments, flow 700 includes operation 702 for providing a set of deep learning (DL) models capable of evaluating the quality of a region of a unit of a video scene and determining artifacts present in the region. The DL models may be of any form. For example, deep-learning models or convolutional neural networks may be used to evaluate the quality and the artifacts present in a region. In some embodiments, two architectures could be combined (e.g., one for evaluating the quality and one for detecting artifacts) to form a DL model for evaluating both quality and detecting artifacts. Providing the DL network may be performed by having a DL model preconfigured in both form and parameters in the circuit or memory. In some embodiments, the DL architecture is preconfigured in the circuit or memory and model parameters are provided later or in a separate step of the operations.

In some embodiments, flow 700 includes operation 704 to provide a pattern that includes an identification of a number of regions in a video scene. In some embodiments, a static set of patterns are provided. For example, stored in a processing circuit or provided based on the video steam or type of video scene. In some embodiments, the patterns may be provided by another deep learning network that determines objects of interest within a video scene. An object may be broken into a spatially related regions of the pattern or regions overlapping the object may be identified, for example. In some embodiments, a set of DL models generally evaluates regions of the video scene and upon detection of an artifact or a low-quality score provides various patterns to perform cross-validation as described herein.

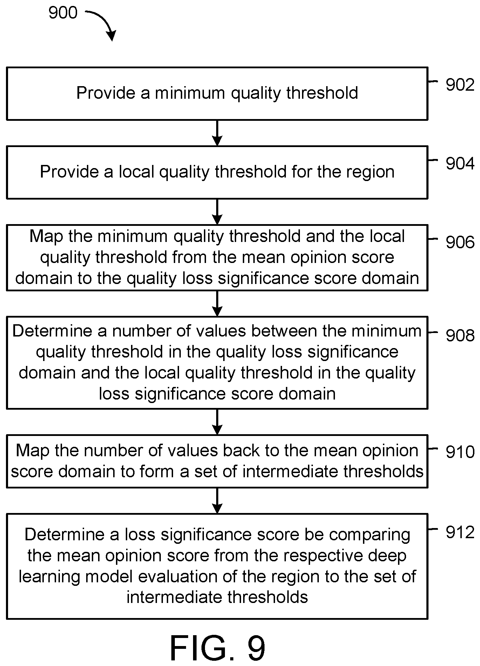

In some embodiments, flow 700 includes evaluating a region of the pattern using a respective deep learning model to obtain a result including a quality score for and the artifact types of the region of the pattern in operation 706. In some embodiments, a loss significance value based on the quality score is calculated and/or a loss relevance score is calculated for the region in operation 708. For example, the loss significance value may be calculated by comparing the quality score to several intermediate thresholds (e.g., following the flow of operations shown in FIG. 9). The loss relevance score may be determined or calculated based on the type of artifacts present in the region and/or the type of video scene. Different types of artifacts may, for example, be perceived as more severe than others, and that perception may vary with the type of video scene. Thus, by calculating a loss relevance value dependent on the type of artifact and or type of video scene may allow for monitoring and/or cross-validation in a way similar to how a human viewer would perceive the video scene. The respective DL models may be of any form. For example, convolutional neural networks may be used to evaluate the quality and the artifacts present in a region. In some embodiments, two architectures could be combined (e.g., one for evaluating the quality and one for detecting artifacts) to form a DL model for evaluating both quality and detecting artifacts. Providing the DL network may be performed by having a DL model preconfigured in both form and parameters in the circuit or memory. In some embodiments, the DL architecture is preconfigured in the circuit or memory and model parameters are provided later or in a separate step of the operations. In some embodiments, the same DL model is used to evaluate several regions of the pattern.

In some embodiments, the loss significance value and the loss relevance value are combined (e.g., using a mathematical function) to determine a validation score element in operation 710. In some embodiments, there are more than one region that make up a pattern. Calculations of the quality score and artifacts; calculation of the loss significance and loss relevance; and combining the loss relevance and loss significance into validation score elements may be repeated for a number of regions in the pattern. According to some embodiments, after each validation score element is calculated they can be combined into a validation score for the pattern in operation 712.

With reference to FIG. 8, flow of operations 800 shows operations for monitoring the quality of a video scene according to some embodiments. In some embodiments, flow 800 includes providing a configuration including a number of patterns in operation 802. Configurations may include patterns with regions of frames that are related in differing but synergistic ways. For example, after a quality loss is detected, a configuration may be generated with patterns that include multiple regions proximate the region in which the quality loss was detected. The configuration may also include patterns with temporally related. For example, if the objects of the video scene were moving in a particular direction, a pattern may include regions of future frames where the regions evaluated have been translated in the direction of motion. In this way the video monitoring system is anticipating or predicting where artifacts may move (or where artifacts may have come from in the case of a pattern including past frames). The configuration may also include patterns with regions related through various resolution scales. In general, a pattern may be provided that is expected to perform well for cross-validation and/or monitoring of any quality loss in the video scene.

In some embodiments, flow 800 includes calculating the validation score for each pattern of the configuration in operation 804. For example, the validation scores could be calculating using the operations described in flow 700. In some embodiments, flow 800 includes calculating a confidence score using the validation score for each pattern of the configuration in operation 806. The validation scores of each pattern may be summed or otherwise combined by a different mathematical function in order to calculate the confidence score for each region defined in the configuration. For example, the confidence score of a region may be calculated by summing the validation scores of each pattern the region belongs to. In some embodiments, an overall confidence score may be calculated. For example, the overall confidence score may include the maximum confidence score of all regions, the sum of the confidence score of all regions, or the sum of the validation score of all patterns.

With reference to FIG. 9, flow of operations 900 describes operations for calculating a loss significance score using several intermediate quality score thresholds according to some embodiments. In some embodiments, flow 900 includes providing a minimum quality threshold in operation 902. The minimum quality threshold may be provided as a single number across for all the regions being evaluated and represent a global quality score below which the loss significance is at its maximum value. In some embodiments, flow 900 includes providing a local quality threshold for a region in operation 904. The local quality threshold may represent a quality score for which the loss significance becomes nonzero. The local quality threshold may be provided for all regions, or it may be calculated specifically a particular region. For example, previous quality score calculations may be used as in input to a weighted moving average which in turn will provide a local quality threshold that is related to the average quality scores over a short horizon into the past. In this way, the loss significance may first calculate a non-zero value when the quality score becomes lower than the near-term previous quality scores for the same region. In some embodiments, the standard deviation over past quality scores may also be used to calculate the local quality threshold. In some embodiments, the quality scores of regions spatially proximate to the region for which the local quality threshold is being calculated may also be used to determine the local quality threshold.

In some embodiments, flow 900 includes mapping the minimum quality threshold and the local quality threshold from the mean opinion score (MOS) or other quality score to the quality loss significance score domain in operation 906. As described with reference to FIGS. 5 and 6 the mapping can be either linear or nonlinear. In some embodiments, flow 900 includes determining a number of values between the minimum quality threshold in the loss significance domain and the local quality threshold in the loss significance domain are formed in operation 908. The values may be equally spaced between the two mapped or any other advantageous way of choosing the values may be used (e.g., log spacing, etc.). In some embodiments, flow 900 includes mapping the number of values back into the quality score range (e.g., MOS) in operation 910 so that they can be compared to the quality score from a DL model evaluation.

In some embodiments, flow 900 includes determining a loss significance score by comparing the mean opinion score or other quality score from the respective DL model evaluation of the region to the set of intermediate thresholds. For example, the loss significance may be a count of the number of thresholds the quality score dropped below. In some embodiments, the steps of flow 900 may be used to perform operation 708 of flow 700.

**Configuration of Exemplary Embodiments**

As utilized herein, the terms "approximately," "about," "substantially", and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The construction and arrangement of the systems and methods as shown in the various exemplary embodiments are illustrative only. Although only a few embodiments have been described in detail in this disclosure, many modifications are possible (e.g., variations in port or destination quantity, data types, methods of reinsertion, reintroduction, etc., values of parameters, arrangements, etc.). For example, the position of elements may be reversed or otherwise varied, the connections between elements may be direct or indirect, such that there may be one or more intermediate elements connected in between, and the nature or number of discrete elements or positions may be altered or varied. Accordingly, all such modifications are intended to be included within the scope of the present disclosure. The order or sequence of any process or method steps may be varied or re-sequenced according to alternative embodiments. Other substitutions, modifications, changes, and omissions may be made in the design, operating conditions, and arrangement of the exemplary embodiments without departing from the scope of the present disclosure. For example, the embodiments of the present disclosure may be implemented by a single device and/or system or implemented by a combination of separate devices and/or systems.

The term "or," as used herein, is used in its inclusive sense (and not in its exclusive sense) so that when used to connect a list of elements, the term "or" means one, some, or all of the elements in the list. Conjunctive language such as the phrase "at least one of X, Y, and Z," unless specifically stated otherwise, is understood to convey that an element may be either X, Y, Z; X and Y; X and Z; Y and Z; or X, Y, and Z (i.e., any combination of X, Y, and Z). Thus, such conjunctive language is not generally intended to imply that certain embodiments require at least one of X, at least one of Y, and at least one of Z to each be present, unless otherwise indicated.

References herein to the positions of elements (i.e., "top," "bottom," "above," "below") are merely used to describe the orientation of various elements in the FIGURES. It should be noted that the orientation of various elements may differ according to other exemplary embodiments, and that such variations are intended to be encompassed by the present disclosure.

Although the figures show a specific order of method steps, the order of the steps may differ from what is depicted. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps, and decision steps.

The present disclosure contemplates methods, systems, and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer (i.e., ASICs or FPGAs) or any other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

**Claims**

1. A system (200) for monitoring a quality of a video scene, the system (200) comprising:
   one or more circuits configured to perform operations comprising:

   providing a pattern comprising an identification of a plurality of regions in the video scene to be evaluated by deep learning models, the deep learning models trained to determine an artifact type present in a region of the video scene and determine a quality score for the region of the video scene;
   evaluating a region of the pattern using a respective deep learning model of the deep learning models to obtain a result comprising a quality score for and artifact types present in the region of the pattern;
   calculating a validation score for the pattern using the result from each region of the pattern; and
   performing an automated action to affect the quality of the video scene using the validation score.

2. The system (200) of claim 1, the operations further comprising:

   providing a configuration comprising a plurality of patterns; and
   calculating a confidence score using the validation score for each pattern of the configuration.

3. The system (200) of claim 2, wherein the automated action comprises using a deep learning model to upscale the video scene, and wherein the automated action is performed in response to the confidence score being greater than a threshold.

4. The system (200) of any of claims 1 to 3, wherein the plurality of regions of the pattern comprise regions related by at least one of:

   a scale relationship, wherein a first region of the pattern comprises a second region and a third region of the pattern;
   a spatial relationship, wherein the pattern comprises a first region adjacent to a second region; or
   a temporal relationship, wherein the pattern comprises a first region of a frame of the video scene and a second region of a subsequent frame related spatially by a speed at which objects are moving in the video scene.

5. The system (200) of any of claims 1 to 4, wherein the plurality of regions of the pattern are related by a scale pyramid relationship, wherein a first region comprises a first plurality of equally sized regions and each region of the first plurality of equally sized regions comprise a second plurality of equally sized regions, wherein the first region and each of the first plurality of equally sized regions are downsampled to have the same number of pixels.

6. The system (200) of any of claims 1 to 5, wherein evaluating the region of the pattern comprises:

   generating a plurality of intermediate quality thresholds based on a minimum quality threshold and a local quality threshold of the region of the pattern, the local quality threshold comprising a weighted moving average of quality scores from evaluating the respective deep learning model of the region of the pattern; and

comparing the quality score for the region of the pattern to the plurality of intermediate quality thresholds to determine a loss significance value.

7. The system (200) of claim 6, comprising at least one of the following features:

the operations further comprising calculating a loss relevance value using the artifact type present in the region of the pattern and using a mathematical function of the loss significance value and the loss relevance value to determine a validation score element for the region of the pattern;
wherein the respective deep learning model is pretrained, stored in the one or more circuits, and selected to evaluate the region based on a criterion of the region.

8. The system (200) of any of claims 1 to 7, wherein the pattern is configured based on content of the video scene; in particular wherein providing the pattern is performed using an additional deep learning model trained to detect and/or segment regions of interest within the video scene.

9. The system (200) of any of claims 1 to 8, wherein performing the automated action comprises at least one of:

causing the video scene to be provided at a lower resolution;
causing the video scene to be provided at a lower bitrate;
prompting a customer to upgrade to a different level of service;
prioritizing the video scene over other forms of communication traffic;
requesting the video scene from a different server;
storing a portion of the video scene for further analysis;
increasing an amount of buffered video;
alerting the customer that they are experiencing intermittent streaming issues;
performing a video enhancement technique;
alerting a provider of the video scene; or
providing quality analytics related to the video scene to the provider of the video scene.

10. A method for monitoring a quality of a video scene, the method comprising:

providing a pattern comprising an identification of a plurality of regions in the video scene to be evaluated by deep learning models, the deep learning models trained to determine an artifact type present in a region of the video scene and determine a quality score for the region of the video scene;
evaluating a region of the pattern using a respective deep learning model of the deep learning models to obtain a result comprising a quality score for and artifact types present in the region of the pattern;
calculating a validation score for the pattern using the result from each region of the pattern; and
performing an automated action to affect the quality of the video scene using the validation score.

11. The method of claim 10, comprising at least one of the following features:

the method further comprising:

providing a configuration comprising a plurality of patterns; and
calculating a confidence score by combining the validation score for each pattern of the configuration;

wherein the plurality of regions of the pattern comprise regions related by at least one of:

a scale relationship, wherein a first region of the pattern comprises a second region and a third region of the pattern;
a spatial relationship, wherein the pattern comprises a first region adjacent to a second region; or
a temporal relationship, wherein the pattern comprises a first region of a frame of the video scene and a second region of a subsequent frame related spatially by a speed at which objects are moving in the video scene;

wherein evaluating the region of the pattern comprises:

generating a plurality of intermediate quality thresholds based on a minimum quality threshold and a local quality threshold of the region of the pattern, the local quality threshold comprising a weighted moving average of quality scores from evaluating the respective deep learning network region of the pattern; and comparing the quality score for the region of the pattern to the plurality of intermediate quality thresholds to determine a loss significance value.

12. A system (200) for validating neural network determined assessments of a quality of a video scene, the system (200) comprising:
one or more circuits configured to perform operations comprising:

providing a plurality of regions within the video scene;
providing a set of deep learning models comprising deep learning models configured to evaluate a region for an artifact type present in the region and a quality score of the region;
evaluating each region of the plurality of regions using a respective deep learning model of the set of deep learning models to generate a set of results;
combining the set of results using a mathematical function to obtain a validation score for the plurality of regions; and
performing an automated action to affect the quality of the video scene using the validation score.

13. The system (200) of claim 12, the operations further comprising:

providing a second plurality of regions within the video scene;
evaluating each region of the second plurality of regions using a respective deep learning model of the set of deep learning models to generate a second set of results;
combining the second set of results to obtain a second validation score for the second plurality of regions; and
calculating a confidence score based on the validation score and the second validation score.

14. The system (200) of claim 12 or 13, wherein evaluating each region of first plurality of regions comprises:

generating a plurality of intermediate quality thresholds for a region of the plurality of regions based on a minimum quality threshold and a local quality threshold of the region, the local quality threshold comprising a weighted moving average of quality scores from evaluating the respective deep learning network; and
comparing the quality score for the region to the plurality of intermediate quality thresholds to determine a loss significance value;

in particular the operations further comprising calculating a loss relevance value using the artifact type present in the region and using a mathematical function of the loss significance value and the loss relevance value to determine a validation score element for the plurality of regions, and adding the validation score element for each region of the plurality of regions.

15. The system (200) of any of claims 12 to 14, wherein the plurality of regions comprise regions related by at least one of:

a scale relationship, wherein a first region of the plurality of regions comprises a second region and a third region of the plurality of regions;
a spatial relationship, wherein the plurality of regions comprises a first region adjacent to a second region; or
a temporal relationship, wherein the plurality of regions comprise a first region of a first frame and a second region of a subsequent frame related spatially by a speed at which objects are moving in the video scene.

FIG. 1

EP 4 687 096 A1

Video Quality Monitoring Controller Circuit

204

Identified Region

Pattern Creation Circuit
226

Respective DL Model

Quality Score

Video Scene

Input Generation Circuit
206

Region of a Sequence of Frames

Pretrained Deep Learning Model Circuit
208

200

Model Update Circuit
224

Artifacts Present

For Each Pattern

For Each Region

Previous Quality Scores
Minimum Quality Level

Threshold Generation Circuit
210

Relevant Artifacts

Loss Significance Circuit
214

Loss Significance

Validation Circuit
216

Pattern Validation Score

Confidence Circuit
218

Configuration Confidence Score

Response Circuit
220

Action

Quality Score

Loss Relevance Circuit
212

230

Loss Relevance

Communication Circuit
222

FIG. 2A

201

Display 262

Content Provider
Device 252

Network 250

Video Processing Device 254

258
Decoder

256
Communications
Interface

260
Buffer

200
Video Quality
Monitoring System

# FIG. 2B

FIG. 3A

FIG. 3B

**FIG. 4**

From other Validation Score Calculations

FIG. 5

FIG. 6

700 ⌇

| Provide a pattern including an identification of a plurality of regions in a video scene to be evaluated by deep learning models | — 704 |

↓

| Evaluate a region of the pattern using a respective deep learning model to obtain a result including a quality score for and the artifact types of the region of the pattern | — 706 |

↓

| Calculate a loss significance value based on the quality score for the region and loss relevance value based on the artifact types present in the region | — 708 |

↓

| Combine the loss significance and the loss relevance to form a validation score element | — 710 |

↓

| Calculate a validation score using the validation score element for each region of the pattern | — 712 |

FIG. 7

800 ⌇

| Provide a configuration including a number of patterns | — 802 |

↓

| Calculate the validation score for each pattern of the configuration | — 804 |

↓

| Calculate a confidence score using the validation score for each pattern of the configuration | — 806 |

FIG. 8

EP 4 687 096 A1

900

Provide a minimum quality threshold — 902

Provide a local quality threshold for the region — 904

Map the minimum quality threshold and the local quality threshold from the mean opinion score domain to the quality loss significance score domain — 906

Determine a number of values between the minimum quality threshold in the quality loss significance domain and the local quality threshold in the quality loss significance score domain — 908

Map the number of values back to the mean opinion score domain to form a set of intermediate thresholds — 910

Determine a loss significance score be comparing the mean opinion score from the respective deep learning model evaluation of the region to the set of intermediate thresholds — 912

# FIG. 9

| | Europäisches Patentamt<br>European Patent Office<br>Office européen des brevets | **EUROPEAN SEARCH REPORT** | **Application Number**<br><br>EP 25 19 2805 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/201772 A1 (UNIV OXFORD INNOVATION LTD [GB]) 8 October 2020 (2020-10-08)<br>* figures 1-4,6 *<br>* page 3, paragraph 2 *<br>* page 4, line 6 - line 32 * | 1-15 | INV.<br>G06T5/00<br>G06T7/00<br>H04N7/18 |
| X | KWONG NGAI-WING ET AL: "Deep Learning Approach for No-Reference Screen Content Video Quality Assessment",<br>IEEE TRANSACTIONS ON BROADCASTING, IEEE SERVICE CENTER, PISCATAWAY, NJ, US,<br>vol. 70, no. 2, 1 June 2024 (2024-06-01), pages 555-569, XP011972074,<br>ISSN: 0018-9316, DOI:<br>10.1109/TBC.2024.3374042<br>[retrieved on 2024-03-26]<br>* abstract *<br>* Section III * | 1-15 | |
| X,P | DE DECKER AXEL ET AL: "No-Reference VMAF: A Deep Neural Network-Based Approach to Blind Video Quality Assessment",<br>IEEE TRANSACTIONS ON BROADCASTING, IEEE SERVICE CENTER, PISCATAWAY, NJ, US,<br>vol. 70, no. 3,<br>1 September 2024 (2024-09-01), pages 844-861, XP011982920,<br>ISSN: 0018-9316, DOI:<br>10.1109/TBC.2024.3399479<br>[retrieved on 2024-06-19]<br>* abstract *<br>* figures 1,2 *<br>* Sections II.D and III * | 1-15 | TECHNICAL FIELDS SEARCHED (IPC)<br><br>G06T<br>H04N |

-/--

The present search report has been drawn up for all claims

| Place of search | Date of completion of the search | Examiner |
|---|---|---|
| Munich | 3 December 2025 | Leclercq, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

**page 1 of 2**

Europäisches
Patentamt

European
Patent Office

Office européen
des brevets

## EUROPEAN SEARCH REPORT

**Application Number**

**EP 25 19 2805**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | XU MUNAN ET AL: "C3DVQA: Full-Reference Video Quality Assessment with 3D Convolutional Neural Network", ICASSP 2020 - 2020 IEEE INTERNATIONAL CONFERENCE ON ACOUSTICS, SPEECH AND SIGNAL PROCESSING (ICASSP), IEEE, 4 May 2020 (2020-05-04), pages 4447-4451, XP033792695, DOI: 10.1109/ICASSP40776.2020.9053031 [retrieved on 2020-04-01] * the whole document * ----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 3 December 2025 | Leclercq, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 2805

This annex lists the patent family members relating to the patent documents cited in  the above-mentioned European search report.
The members are as contained in the European Patent Office EDP file on
The European Patent Office is in no way liable for these particulars which are merely given for the purpose of information.

03-12-2025

| Patent document cited in search report | Publication date | Patent family member(s) | | Publication date |
|---|---|---|---|---|
| WO 2020201772 A1 | 08-10-2020 | EP | 3948770 A1 | 09-02-2022 |
| | | JP | 7603995 B2 | 23-12-2024 |
| | | JP | 2022528539 A | 14-06-2022 |
| | | US | 2022207728 A1 | 30-06-2022 |
| | | WO | 2020201772 A1 | 08-10-2020 |

EPO FORM P0459

For more details about this annex : see Official Journal of the European Patent Office, No. 12/82